# EUROPÄISCHE PATENTSCHRIFT

(11) **EP 2 157 028 B1**
(45) Veröffentlichungstag und Bekanntmachung des Hinweises auf die Patenterteilung: **10.08.2011**
(21) Anmeldenummer: 09008104.3
(22) Anmeldetag: 20.06.2009
(51) Int. Cl.: B65D 77/04, B67D 7/32

(54) **Entnahmearmatur mit einem Armaturengehäuse aus Kunststoff für Transport- und Lagerbehälter für Flüssigkeiten**
Dispensing head assembly comprising a casing made of plastic for transport and storage containers for liquids
Armature de robinet dotée d'un boîtier d'armatures en plastique pour récipients de transport et de stockage de liquides

(30) Priorität: 20.08.2008 DE 102008038546
(43) Veröffentlichungstag der Anmeldung: 24.02.2010
(73) Patentinhaber: PROTECHNA S.A., 1701 Fribourg (CH)
(72) Erfinder:
(74) Vertreter: advotec.

(56) Entgegenhaltungen:
- EP-A- 1 462 386
- WO-A-2005/082739
- DE-A1- 10 242 954
- DE-A1- 19 815 082

## Beschreibung

Die Erfindung betrifft eine Entnahmearmatur mit einem Armaturengehäuse aus Kunststoff, insbesondere Klappen- oder Kugelhahn, für Transport- und Lagerbehälter für Flüssigkeiten, die mit einem Innenbehälter aus Kunststoff mit einem verschließbaren Einfüllstutzen und einem Entleerstutzen zum Anschluss der Entnahmearmatur, einem Außenmantel aus Metallgitter oder Blech sowie einem palettenartigen Untergestell aus Metall oder einem zumindest teilweise elektrisch leitenden Kunststoff zum Abstützen des Innenbehälters ausgestattet sind.

Bei einem in der DE 198 15 082 A1 beschriebenen Transport-und Lagerbehälter für Flüssigkeiten ist in der am Auslaufstutzen des Innenbehälters angebrachten Entnahmearmatur der gattungsgemäßen Art ein Erdungsteil angeordnet, das als ein gekrümmtes Blech oder Plättchen aus Metall ausgebildet ist, das sich über einen Teilbereich der Innenbohrung der Entnahmearmatur erstreckt und über eine Befestigungsschraube und ein Erdungskabel an das Untergestell des Behälters angeschlossen ist.

Diese Entnahmearmatur hat folgende Nachteile:
Durch die zur Anbringung des Blechs oder Plättchens aus Metall in dem Armaturengehäuse aus Kunststoff erforderliche Befestigungsschraube, die durch die Gehäusewand geschraubt wird, ist die Dichtheit der Armatur nicht gewährleistet. Bei Transport- und Lagerbehältern für bestimmte flüssige Lebensmittel ist die Verwendung von Metallteilen nicht zulässig und damit mit dieser Armatur ausgerüstete Behälter für derartige flüssige Lebensmittel nicht verwendbar. Schließlich besteht bei dem bekannten Flüssigkeitsbehälter die Gefahr, dass beim Transport und der Lagerung von aggressiven Flüssigkeiten das Erdungsteil von der Flüssigkeit derart beschädigt wird, dass die elektrische Erdung nicht mehr funktionstüchtig ist.

Ferner sind für Flüssigkeitsbehälter bestimmte Entnahmearmaturen mit einem antistatisch ausgerüsteten Gehäuse bekannt, die für ein Massenprodukt zu teuer sind.

Der Erfindung liegt die Aufgabe zugrunde, die gattungsgemäße Entnahmearmatur für Transport- und Lagerbehälter für Flüssigkeiten im Hinblick auf eine sichere und umfassende Erdung zur Ableitung der sich beim Befüllen mit Flüssigkeiten und bei der Entnahme von Flüssigkeiten aufgrund von Flüssigkeitsreibung bildenden elektrischen Ladungen und eine preisgünstige Herstellung-weiterzuentwickeln

Die Aufgabe wird erfindungsgemäß gelöst durch eine Entnahmearmatur für Transport- und Lagerbehälter für Flüssigkeiten mit den Merkmalen des Patentanspruchs 1.

Die Unteransprüche beinhalten vorteilhafte und zweckmäßige Weiterbildungen der Erfindung.

Die erfindungsgemäße Entnahmearmatur, deren Gehäuse mit einem Anschlussflansch aus elektrisch leitendem Kunststoff zum Anschweißen an den Entleerstutzen des Kunststoffinnenbehälters eines mit einem Außenmantel aus Metallgitter oder Blech und mit einem palettenartigen Untergestell aus elektrisch leitendem Material ausgestatteten Transport- und Lagerbehälters für Flüssigkeiten ausgestattet ist, ermöglicht eine sichere elektrische Erdung der bei der Entleerung aus dem Innenbehälter auslaufenden Flüssigkeit übers einen elektrischen Erdungsleiter, der den Anschlussflansch mit dem palettenartigen Untergestell oder dem Außenmantel verbindet. Die Entnahmearmatur mit dem Anschlussflansch aus elektrisch leitendem Kunststoff ist wesentlich preisgünstiger als die. Entnahmearmatur nach dem Stand der Technik, deren gesamtes Kunststoffgehäuse antistatisch ausgerüstet ist.

Die Erfindung ist nachstehend anhand von Zeichnungsfiguren erläutert, die folgendes darstellen:
- Fig. 1: eine perspektivische Darstellung eines Transport- und Lagerbehälters für Flüssigkeiten,
- Fig. 2: eine perspektivische teilweise aufgebrochene vergrößerte Darstellung der Entnahmearmatur mit einem Anschlussflansch der an den Entleerstutzen des Innenbehälters des Transport- und Lagerbehälters anschweiβbar ist,
- Fig. 3: eine vergrößerte perspektivische Darstellung des Auslaufbereichs des Transport- und Lagerbehälters mit der Entnahmearmatur,
- Fig. 4: eine vergrößerte perspektivische Darstellung des Anschlussflansches der Entnahmearmatur,
- die Fign. 5, 6a, 6b, 7a, 7b, 8a, 8b und 9: verschiedene Arten der Befestigung eines elektrischen Erdungskabels an einer Zunge des Anschlussflansches,
- Fig. 10: eine Befestigungsmöglichkeit des Erdungskabels an der Bodenwanne des palettenartigen Untergestells des Transport- und Lagerbehälters und
- die Fign. 11a und 11b: zwei Möglichkeiten zur Befestigung eines elektrischen Erdungsstreifenelements an dem Anschlussflansch der Entnahmearmatur.

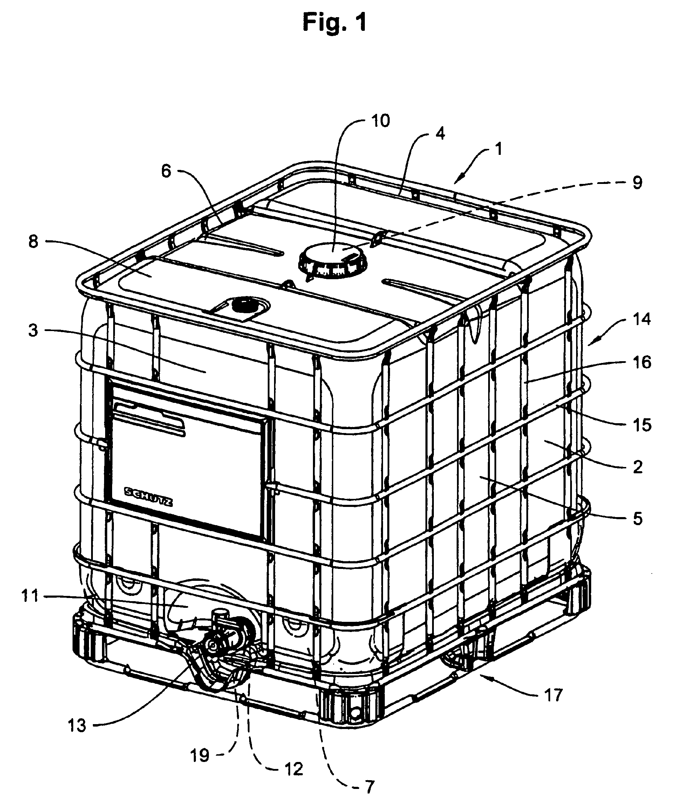

Der als Einweg- und Mehrwegbehälter einsetzbare Transportund Lagerbehälter 1 für Flüssigkeiten nach Figur 1 weist als Hauptbauteile einen austauschbaren quaderförmigen Innenbehälter 2 aus Kunststoff auf mit einer Stirnwand 3, einer Rückwand 4 und zwei Seitenwänden 5, 6, einem unteren als Ablaufboden ausgebildeten Boden 7 und einem oberen Boden 8, einem an diesem angeformten, mit einem Deckel 10 verschließbaren Einfüllstutzen 9 und einem an einer Einwölbung 11 im unteren Abschnitt der Stirnwand 3 des Innenbehälters 2 angeformten Entleerstutzen 12, der mit dem Innenbehälter 2 einteilig durch Blasformen hergestellt ist, zur Anbringung einer Entnahmearmatur 13, insbesondere eines Kugel- oder Klappenhahns, ferner einen als Gittermantel ausgebildeten Außenmantel 14 mit sich kreuzenden horizontalen und vertikalen Gitterstäben 15, 16 aus Metall zur Aufnahme des Innenbehälters 2 sowie ein palettenartiges Untergestell 17 mit euronormgerechten Längen- und Breitenabmessungen zur Abstützung des Innenbehälters 2.

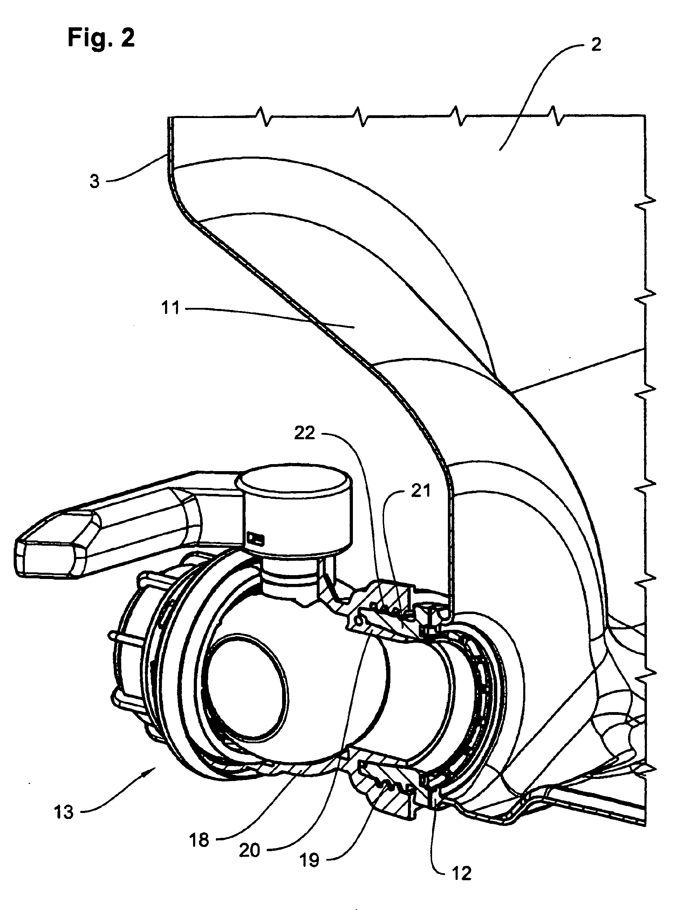

Das aus einem Polyethylen hoher Dichte (PE-HD) spritzgegossene Armaturengehäuse 18 der Entnahmearmatur 13 ist mit dem mit einem Innengewinde 19 versehenen Einlaufstutzen 20 auf einen ein entsprechendes Außengewinde 22 aufweisenden Anschlussflansch 21 aufgeschraubt und gegen diesen abgedichtet und der Anschlussflansch 21 ist zusammen mit der aufgeschraubten Entnahmearmatur 13 vorzugsweise durch Spiegelschweißen an dem Entleerstutzen 12 des Innenbehälters 2 angebracht. Der Anschlussflansch 21 ist als Spritzgussteil aus einem elektrisch leitenden Kunststoff, zum Beispiel Polyethylen mit Kohlenstoff oder Nanopartikeln gefertigt (Figur 2).

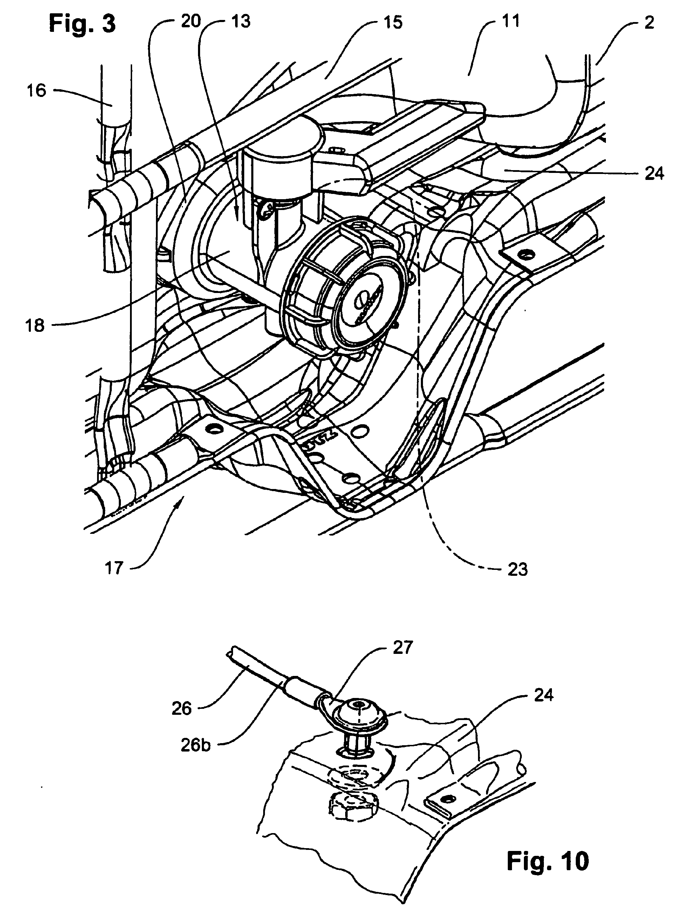

Die Entnahmearmatur 13 ist mit einer elektrischen Erdung durch einen Erdungsleiter 23 ausgestattet, der den Anschlussflansch 21 des Armaturengehäuses 18 mit dem wannenartigen Boden 24 des metallischen Untergestells 17 verbindet (Figur 3).

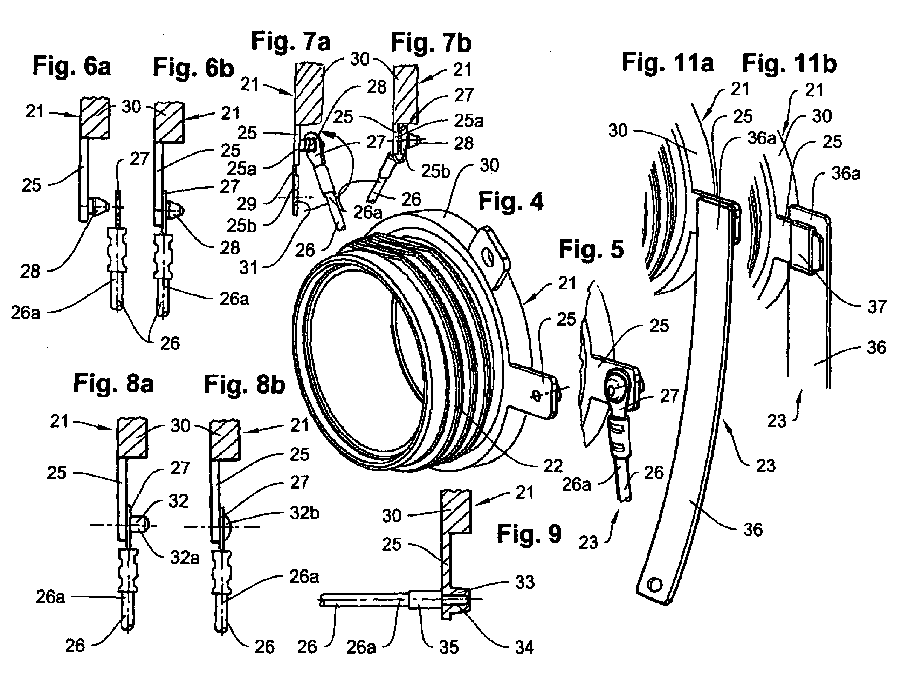

Zum Befestigen des Erdungsleiters 23 an dem Flanschring 30 des Anschlussflansches 21 dient eine an dem Flanschring angespritzte Zunge 25, die im montierten Zustand der Entnahmearmatur 13 frei zugängig ist (Figur 4).

Die Figuren 5 bis 9 zeigen verschiedene Arten der Befestigung des als elektrisches Kabel 26 ausgebildeten Erdungsleiters 23 an der Zunge 25 am Flanschring 30 des Anschlussflansches 21.

Gemäß Figur 5 wird das eine Ende 26a des elektrischen Erdungskabels 26 mit einer an diesem angebrachten Ringzunge 27 an die Befestigungszunge 25 des in Figur 4 dargestellten Anschlussflansches 21 angeschraubt.

Die Figuren 6a und 6b verdeutlichen das Aufclipsen der Ringzunge 27 des Erdungskabels 26 auf einem pilzförmigen Zapfen 28 der Befestigungszunge 25 am Flanschring 30 des Anschlussflansches 21.

Bei der in den Figuren 7a und 7b dargestellten Befestigungsart ist die Befestigungszunge 25 des Anschlussflansches 21 durch eine Sollbiegestelle 29 in zwei Abschnitte 25a, 25b unterteilt, wobei der an den Flanschring 30 des Anschlussflansches 21 angrenzende Abschnitt 25a einen pilzförmigen Zapfen 28 und der freie Abschnitte 25b ein Befestigungsloch 31 aufweist. Zur Befestigung des einen Endes 26a des Erdungskabels 26 wird dessen Ringzunge 27 auf den Zapfen 28 an dem Abschnitt 25a der Zunge aufgesteckt und der freie Abschnitt 25b der Zunge 25 wird umgebogen und auf den Zapfen 28 aufgeclipst, so dass die Ringzunge 27 des Kabels 26 zwischen den beiden Zungenabschnitten 25a, 25b der Zunge 25 des Anschlussflansches 21 festgeklemmt wird.

Die Figuren 8a und 8b veranschaulichen eine weitere Art der Befestigung, bei der die Ringzunge 27 am einen Ende 26a des Erdungskabels 26 auf einen glatten Zapfen 32 an der Zunge 25 am Flanschring 30 des Anschlussflansches 21 aufgesetzt und das über die Ringzunge 27 vorstehende Zapfenende 32a aufgeschmolzen und zu einem Nietkopf 32b verformt wird.

Bei der in Figur 9 gezeigten Befestigungsmöglichkeit besitzt der Zapfen 33 an der Befestigungszunge 25 des Anschlussflansches 21 eine Bohrung 34 für einen an dem einen Ende 26a des Erdungskabels 26 angebrachten Stecker 35.

Gemäß Figur 10 kann das andere Ende 26b des Erdungskabels 26 mit einer an diesem angebrachten Ringzunge 27 an dem Blechboden 24 des Untergestells 17 festgeschraubt werden. Ferner besteht die Möglichkeit das Erdungskabel 26 entsprechend den in den Figuren 6a, 6b; 7a, 7b; 8a, 8b und 9 dargestellten Befestigungsarten an dem Blechboden 24 des Untergestells 17 anzubringen.

Des Weiteren besteht die Möglichkeit, das Ende 26b des Erdungskabels 26 an dem als Gittermantel ausgebildeten Außenmantel 14 der Transport- und Lagerbehälter anzubringen.

Die Figuren 11a und 11b veranschaulichen die Ausbildung des Erdungsleiters 23 als ein elektrisch leitendes Streifenelement 36 aus Kunststoff oder Metall. Entsprechend Figur 11a kann das eine Ende 36a des Streifenelementes 36 an die Zunge 25 am Flanschring 30 des Anschlussflansches 21 der Entnahmearmatur 13 angeschweißt oder angeklebt werden. Ferner besteht die Möglichkeit, das Streifenelement 36 mit der Zunge 25 des Anschlussflansches 21 zu vernieten, zu verschrauben oder zu verclinchen.

Bei der in Figur 11b gezeigten Befestigungsweise wird das Streifenelement 36 mit einer an dessen Ende 36a angeordneten Lasche 37 auf die Zunge 25 am Flanschring 30 des Anschlussflansches 21 aufgesteckt.

Bei einer weiteren Ausführungsform der Entnahmearmatur 13 ist der Teil des Anschlussflansches 21, der beim Entleeren des Transport- und Lagerbehälters 1 mit der auslaufenden Flüssigkeit in Kontakt kommt, aus einem Kunststoff mit einem elektrisch leitenden Zusatzmaterial hergestellt, während der übrige Teil des Anschlussflansches aus reinem Kunststoff besteht. Durch einen derartigen Anschlussflansch werden die Herstellungskosten der Entnahmearmatur des Transport- und Lagerbehälters verbilligt.

### Bezugszeichen

- 1: Transport- und Lagerbehälter
- 2: Innenbehälter
- 3: Stirnwand von 2
- 4: Rückwand von 2
- 5: Seitenwand von 2
- 6: Seitenwand von 2
- 7: unterer Boden von 2
- 8: oberer Boden von 2
- 9: Einfüllstutzen an 8
- 10: Deckel von 9
- 11: Einwölbung in 3
- 12: Entleerstutzen von 2
- 13: Entnahmearmatur
- 14: Außenmantel
- 15: horizontaler Gitterstab
- 16: vertikaler Gitterstab
- 17: Untergestell
- 18: Armaturengehäuse von 13
- 19: Innengewinde von 20
- 20: Einlaufstutzen von 18
- 21: Anschlussflansch
- 22: Außengewinde von 21
- 23: Erdungsleiter
- 24: Boden von 17
- 25: Zunge an 30 von 21
- 25a: Abschnitt von 25
- 25b: Abschnitt von 25
- 26: elektrisches Kabel
- 26a: Ende von 26
- 26b: Ende von 26
- 27: Ringzunge von 26
- 28: Zapfen an 25
- 29: Sollbiegestelle von 25
- 30: Flanschring von 21
- 31: Befestigungsloch in 25b
- 32: Zapfen an 25 (Figur 8a)
- 32a: Zapfenende von 32
- 32b: Nietkopf (Figur 8b)
- 33: Zapfen an 25 (Figur 9)
- 34: Bohrung in 33
- 35: Stecker an 26
- 36: Streifenelement
- 36a: Ende von 36
- 37: Lasche an 36a

## Patentansprüche

1. Entnahmearmatur (13) mit einem Armaturengehäuse (18) aus Kunststoff, insbesondere Klappen- oder Kugelhahn für Transport- und Lagerbehälter für Flüssigkeiten, die mit einem Innenbehälter (2) aus Kunststoff mit einem verschließbaren Einfüllstutzen (9) und einem Entleerstutzen (12) zum Anschluss der Entnahmearmatur (13), einem Außenmantel (14) aus Me-tallgitter oder Blech sowie einem palettenartigen Untergestell (17) aus Metall oder einem zumindest teilweise elektrisch leitenden Kunst-stoff zum Abstützen des Innenbehälters (2) ausgestattet sind, sowie mit einer elektrischen Erdung der Entnahmearmatur (13) durch einen Erdungsleiter (23),
**gekennzeichnet durch**
einen vollständig oder teilweise aus elektrisch leitfähigem Kunststoffmaterial hergestellten, als Gewindeflansch ausgebildeten Anschlussflansch (21), auf den das Armaturengehäuse (18) mit dem Einlaufstutzen (20) aufgeschraubt ist, und welcher an den Entleerstutzen (12) des Innenbehälters (2) anschweißbar ist, wobei mit dem Erdungsleiter (23) der Anschlussflansch (21) des Armaturengehäuses (18) mit dem Untergestell (17) oder dem Außenmantel (14) des Transport- und Lagerbehälter (1) verbindbar ist.

2. Entnahmearmatur nach Anspruch 1, **dadurch gekennzeichnet, dass** der Anschlussflansch (21) als Kunststoff-Spritzgussteil hergestellt ist und an den Anschlussflansch (21) eine Zunge (25) zum Befestigen des Erdungsleiters (23) angespritzt ist, wobei die Zunge (25) im montierten Zustand der Entnahmearmatur (13) frei zugängig ist.

3. Entnahmearmatur nach Anspruch 1 und 2, **dadurch gekennzeichnet, dass** der Erdungsleiter (23) als elektrisches Kabel (26) ausgebildet ist.

4. Entnahmearmatur nach Anspruch 1 und 2, **gekennzeichnet durch** eine Ausbildung des Erdungsleiters (23) als ein elektrisch leitendes Streifenelement (36) aus Kunststoff oder Metall.

5. Entnahmearmatur nach einem der Ansprüche 1 bis 4, **dadurch gekennzeichnet, dass** der Teil des Anschlussflansches (21), der beim Entleeren des Transport- und Lagerbehälters (1) mit der auslaufenden Flüssigkeit in Kontakt kommt, aus einem Kunststoff mit elektrisch leitendem Zusatzmaterial hergestellt ist, während der übrige Teil des Anschlussflansches aus reinem Kunststoff besteht.

6. Entnahmearmatur nach einem der Ansprüche 1 bis 5, **dadurch gekennzeichnet, dass** der Anschlussflansch (21) aus Polyethylen mit Kohlenstoff hergestellt ist.

7. Entnahmearmatur nach einem der Ansprüche 1 bis 5, **dadurch gekennzeichnet, dass** der Anschlussflansch (21) aus Polyethylen mit Nanopartikeln besteht.

## Claims

1. A tapping valve (13) comprising a valve body (18) made of plastic, in particular flap or ball tap for transport and storage containers for liquids, which are equipped with an inner container (2) made of plastic comprising a closable filler neck (9) and a draining neck (12) for connecting the tapping valve (13), an outer jacket (14) made of metal grid or metal sheet, as well as a pallet-like subframe (17) made of metal or of an at least partially electrically conductive plastic for supporting the inner container (2), as well as comprising an electric grounding for the tapping valve (13) by means of a ground conductor (23),
**characterized by**
a connecting flange (21), which is completely or partially produced of electrically conductive plastic material and which is embodied as a threaded flange, onto which the valve body (18) comprising the inlet port (20) is screwed, and which can be welded to the draining neck (12) of the inner container (2), wherein the connecting flange (21) of the valve body housing (18) can be connected to the subframe (17) or to the outer jacket (14) of the transport and storage container (1) by means of the ground conductor (23).

2. The tapping valve according to claim 1, **characterized in that** the connecting flange (21) is produced as plastic injection molding part and a tongue (25) for attaching the ground conductor (23) is injection-molded to the connecting flange (21), wherein the tongue (25) is freely accessible in the assembled state of the tapping valve (13).

3. The tapping valve according to claim 1 and 2, **characterized in that** the ground conductor (23) is embodied as an electric cable (26).

4. The tapping valve according to claim 1 and 2, **characterized by** an embodiment of the ground conductor (23) as an electrically conducting strip element (36) made of plastic or metal.

5. The tapping valve according to one of claims 1 to 4, **characterized in that** the part of the connecting flange (21), which comes into contact with the draining liquid in response to the emptying of the transport and storage container (1), is produced from a plastic comprising electrically conducting auxiliary material, while the remaining part of the connecting flange consists of pure plastic.

6. The tapping valve according to one of claims 1 to 5, **characterized in that** the connecting flange (21) is produced from polyethylene comprising carbon.

7. The tapping valve according to one of claims 1 to 5, **characterized in that** the connecting flange (21) consists of polyethylene comprising nanoparticles.

## Revendications

1. Armature de prélèvement (13) avec un boîtier d'armature (18) en plastique, en particulier un robinet de vidange ou à bille pour des récipients de transport et de stockage pour liquides, qui sont pourvus d'un récipient interne (2) en plastique, avec un embout de remplissage refermable (9) et un embout d'évacuation (12) pour le raccordement de l'armature de prélèvement (13), une enveloppe extérieure (14) en grille métallique ou en tôle, ainsi qu'un châssis de base du genre palette (17) en métal ou en un plastique au moins partiellement électriquement conducteur, pour le support du récipient intérieur (2), ainsi qu'avec une mise à la terre électrique de l'armature de prélèvement (13) par un conducteur de mise à la terre (23),
**caractérisée par**
une bride de raccordement (21) fabriquée à partir d'une matière plastique complètement ou partiellement conductrice électriquement, conçue comme une bride filetée, sur laquelle est vissé le boîtier d'armature (18) avec l'embout d'alimentation (20), et qui peut être soudée à l'embout d'évacuation (12) du récipient interne (2), dans laquelle, avec le conducteur de mise à la terre (23), la bride de raccordement (21) du boîtier d'armature (18) peut être reliée au châssis de base (17) ou à l'enveloppe extérieure (14) du récipient de transport et de stockage (1).

2. Armature de prélèvement selon la revendication 1, **caractérisée en ce que** la bride de raccordement (21) est fabriquée comme une pièce moulée par injection en plastique, et **en ce qu'**une langue (25) pour la fixation du conducteur de mise à la terre (23) est moulée par injection sur la bride de raccordement (21), la langue (25) étant librement accessible à l'état monté de l'armature de prélèvement (13).

3. Armature de prélèvement selon les revendications 1 et 2, **caractérisée en ce que** le conducteur de mise à la terre (23) est conçu comme un câble électrique (26).

4. Armature de prélèvement selon les revendications 1 et 2, **caractérisée par** une réalisation du conducteur de mise à la terre (23) comme un élément à bande électriquement conducteur (36) en plastique ou en métal.

5. Armature de prélèvement selon l'une des revendications 1 à 4, **caractérisée en ce que** la partie de la bride de raccordement (21) qui entre en contact avec le liquide sortant lors de la vidange du récipient de transport et de stockage (1) est fabriquée à partir d'un plastique avec un matériau d'apport électriquement conducteur, tandis que le reste de la bride de raccordement est constituée de plastique pur.

6. Armature de prélèvement selon l'une des revendications 1 à 5, **caractérisée en ce que** la bride de raccordement (21) est fabriquée en polyéthylène avec du carbone.

7. Armature de prélèvement selon l'une des revendications 1 à 5, **caractérisée en ce que** la bride de raccordement (21) est constituée de polyéthylène avec des nanoparticules.
